# EUROPÄISCHE PATENTSCHRIFT

(11) **EP 3 561 196 B1**
(45) Veröffentlichungstag und Bekanntmachung des Hinweises auf die Patenterteilung: **08.12.2021**
(21) Anmeldenummer: 19000190.9
(22) Anmeldetag: 18.04.2019
(51) Int. Cl.: E04F 11/18, F16B 7/04, F16B 9/00

(54) **VORRICHTUNG, DIE EIN HOHLPROFIL UND EINEN AN DER MANTELFLÄCHE DES HOHLPROFILS VERANKERTEN GEGENSTAND UMFASST**
DEVICE COMPRISING A HOLLOW PROFILE AND AN OBJECT ANCHORED TO THE SURFACE OF THE HOLLOW PROFILE
DISPOSITIF COMPORTANT UN PROFIL CREUX ET UN OBJET ANCRÉ À LA SURFACE DUDIT PROFIL CREUX

(30) Priorität: 24.04.2018 AT 1172018
(43) Veröffentlichungstag der Anmeldung: 30.10.2019
(73) Patentinhaber: Bürscher, Franz, 3343 Hollenstein an der Ybbs (AT)
(72) Erfinder: Bürscher, Franz, 3343 Hollenstein an der Ybbs (AT); Wahler, Franz, 3341 Ybbsitz (AT)

(56) Entgegenhaltungen:
- EP-A1- 1 155 638
- DE-A1- 1 920 785
- DE-A1- 2 108 342
- DE-U1- 29 620 841

## Beschreibung

Die Erfindung betrifft eine Vorrichtung, die ein Hohlprofil und einen an der Mantelfläche des Hohlprofils verankerten Gegenstand umfasst.

Gemäß einem typischen Einsatzfall ist die besagte Vorrichtung eine T-Verbindung zwischen zwei Profilen, beispielsweise einem als Hohlprofil ausgebildeter Handlauf eines Geländers und einem an diesem Handlauf befestigten Geländersteher, welcher üblicherweise auch als Hohlprofil ausgebildet ist. An diesem Einsatzfall ist der Wert der Erfindung besonders deutlich erkennbar.

Insbesondere, wenn Wanderwegbereiche oder Treppen in steilem Freigelände mit Handläufen aus Metall ausgestattet werden sollen, ist es wünschenswert, dass das erforderliche Ausmessen und der Zusammenbau von Handlauf und diesen tragenden Stehern im Gelände erfolgen kann, ohne dass zwischendurch Arbeitsschritte an einem anderen Ort, wie typischerweise in einer Werkstatt, durchgeführt werden müssen. Daraus ergibt sich die Forderung, dass an den Metallteilen für die Montage im Gelände maximal nur einfache Bohr- und Schneidearbeiten sowie Fügearbeiten (Zusammenstecken von Teilen, Verschrauben) erforderlich sein dürfen. Darüber hinaus ist auch eine gefällige Optik gefordert und aus Sicherheitsgründen soll am fertigen Gegenstand (Handlauf + Steher) kein Verbindungsteil über die Flucht der Profile von Steher und Handlauf vorstehen. Die Regeln bezüglich Festigkeit und marktgerechten Preisen sind natürlich auch einzuhalten. Eine weitere Herausforderung ergibt sich daraus, dass der Winkel, unter welchem die beiden Profile zueinander montiert werden sollen, einstellbar sein muss, da Steher üblicherweise vertikal ausgerichtet sind, die Neigung des Handlaufes aber an die Neigung der Treppe bzw. des Weges angepasst sein muss.

Die JP 60162120 U zeigt eine Bauweise für die T-Verbindung zwischen zwei Hohlprofilen, welche typischerweise Rundrohre sind.

Das durgehende Hohlprofil hat größeren Durchmesser als das endende Hohlprofil der T-Verbindung. Ein Endbereich des endenden Hohlprofils ist durch Längsschlitze geschwächt, ragt durch eine Bohrung in den Hohlraum des durchgehenden Hohlprofils und ist durch eine in dem Hohlraum befindliche Kugel, die stirnseitig in den Endbereich hineinragt, aufgespreizt. Das Herstellen der Bauweise erfordert entweder große und schwere Vorrichtungen, die eine Werkstattumgebung erfordern, oder derart hohes handwerkliches Geschick, dass dies üblichen Montierenden nicht zuzumuten ist.

In der DE 8625761 U1 und der DE 29620841 U1 werden Verbindungsbauteile nach Art von Spreizdübeln für das Befestigen eines Teiles an einer Bohrung in der Mantelfläche eines Profils vorgeschlagen. Demgemäß ist ein länglicher Hohlkörper durch Längsschlitze zu einem Kreis von Federzungen aufgespaltet. Er ragt mit diesen Federzungen in die Bohrung und die Federzungen werden durch einen von ihnen gemeinsam umringten Spreizkörper radial auseinandergespreizt, sodass sie unter Druck an der Mantelfläche der Bohrung anliegen und somit verankert sind. Die Verbindung hält gegen Biegebeanspruchung nur sehr wenig, und es ist nicht geklärt, wie der Winkel zwischen den derart verbunden Profilen frei einstellbar sein kann.

Die JP 11141085 A schlägt für die T-Verbindung zwischen zwei Hohlprofilen einen mehrteiligen Verbindungsbeschlag vor. Ein Teil des Verbindungsbeschlages ist mit einem Längsbereich stirnseitig in das endende Rohr eingesteckt und mit diesem verklemmt. Ein schlanker Fortsatz des Verbindungsbeschlages ragt mit einem Endbereich durch eine Bohrung in dessen Mantelfläche in das durchgehende Hohlprofil hinein. An besagtem Endbereich ist ein Ankerteil, welcher die Form eines schlanken rechteckigen Plättchens hat, schwenkbar befestigt. Für das Herstellen der Verbindung wird das Plätten so gedreht, dass seine Längsrichtung parallel zu dem schlanken Fortsatz ausgerichtet ist; dann werden Fortsatz und Plättchen gemeinsam durch die Bohrung in den Hohlraum des durchgehenden Hohlprofils eingesteckt. Im nächsten Schritt wird das Plättchen aus der parallelen Lage zum Fortsatz herausgedreht, womit der Fortsatz nicht mehr aus der Bohrung am durchgehenden Hohlprofil herausgezogen werden kann. Die Bauweise funktioniert zwar, hat aber die Nachteile, dass das Erreichen hoher mechanischer Festigkeit damit schwierig ist, dass der Winkel zwischen den beiden Profilen nicht frei einstellbar ist, und dass der Verbindungsbeschlag bei der Montage weiter in das Hohlprofil hineingesteckt werden muss, als er in fertig montiertem Zustand ist.

Die CH 697 770 B1 zeigt eine Bauweise für eine T-Verbindung zwischen einem Hohlprofil und einem Gewindebolzen, welcher durch eine Bohrung in der Mantelfläche des Hohlprofils hindurch in dessen Hohlraum hineinragt. Im Hohlraum des Hohlprofils befindet sich an der Bohrung ein Halteteil, in welchem ein Gewindemutternteil schwenkbar gelagert gehalten ist, welcher bei hergestellter Verbindung mit dem Gewindebolzen in Gewindeeingriff ist. Bei der Montage muss der Halteteil im Hohlraum des Hohlprofils von einer Stirnseite des Hohlprofils her an die richtige Stelle gerückt werden. Er ist durch einen elastischen Fortsatz im Hohlraum kraftschlüssig gegen wegkullern verspreizt. Vor allem bei langen Hohlprofilen ist es sehr mühsam den Halteteil an die richtige Stelle zu rücken.

Die DE 19 20 785 A1, EP 1 155 638 A1 und DE 21 08 342 A1 offenbaren jeweils eine Vorrichtung gemäß dem Oberbegriff von Anspruch 1.

Von diesem Stand der Technik ausgehend besteht die der Erfindung zu Grunde liegende Aufgabe darin, eine Bauweise für das Verankern eines Teils an einem von den Profilenden weit entfernten Teil der Mantelfläche eines Hohlprofils zu schaffen, wobei der Winkel, unter welchem die beiden Profile zueinander montiert werden sollen, einstellbar ist, um die Neigung des Handlaufes an die Neigung der Treppe bzw. des Weges anpassen zu können. Für das Herstellen der Verankerung dürfen nur solche Bearbeitungsschritte am Hohlprofil erforderlich sein, welche mit einfachem Handwerkzeug auch in Freigelände fernab von professionellen Werkstätten durchführbar sind. Die Verankerung soll herstellbar sein, ohne dass an einer Mantelflächenseite des Hohlprofils, welche nicht dem zu verankernden Teil zugewandt liegt, eine Störung der Oberfläche des Hohlprofils durch vorstehende Teile oder durch Abtragung von Material erforderlich ist.

Die Verankerung wird mittels zweier voneinander separater Verbindungsteile ausgebildet, welche jeweils einen Fortsatz aufweisen, wobei diese Fortsätze beider Verbindungsteile durch eine gemeinsame Bohrung in der Mantelfläche des Hohlprofils hindurch in den Hohlraum des Hohlprofils hineinragen, wobei die beiden an sich separaten Verbindungsteile außerhalb des Hohlprofils starr miteinander verbindbar sind, und wobei bei miteinander verbundenen Verbindungsteilen, die im Inneren des Hohlprofils befindlichen Fortsätze der beiden Verbindungsteile gemeinsam ein Gebilde bilden, welches in einer zur Ebene der Bohrung in der Mantelfläche des Hohlprofils parallelen Richtung breiter ist als der Durchmesser dieser Bohrung.

Die Erfindung wird durch Zeichnungen zu beispielhaften vorteilhaften Ausführungsformen veranschaulicht:
- Fig. 1:: zeigt eine erste Ausführung einer erfindungsgemäßen Vorrichtung in Teilschnittansicht. Die Schnittebene liegt normal auf das zu verbindende Hohlprofil. Die Achse der erfindungsgemäß in einer Mantelfläche des Hohlprofils erforderlichen Bohrung liegt in der Schnittebene.
- Fig. 2:: Zeigt in Schnittansicht ein Detail aus der Vorrichtung von Fig. 1.
- Fig. 3:: zeigt in Frontalansicht einen Verbindungsteil aus der Vorrichtung von Fig. 1 für sich allein.
- Fig. 4:: zeigt in gleicher Ansicht wie bei Fig. 1 eine zweite Ausführung einer erfindungsgemäßen Vorrichtung.
- Fig. 5:: Zeigt in Schnittansicht ein Detail aus Vorrichtung von Fig. 4.
- Fig. 6:: zeigt in Schrägrissansicht einen Verbindungsteil aus der Vorrichtung von Fig. 4 für sich allein.
- Fig. 7:: zeigt eine Vorrichtung, die nicht erfindungsgemäß ist.

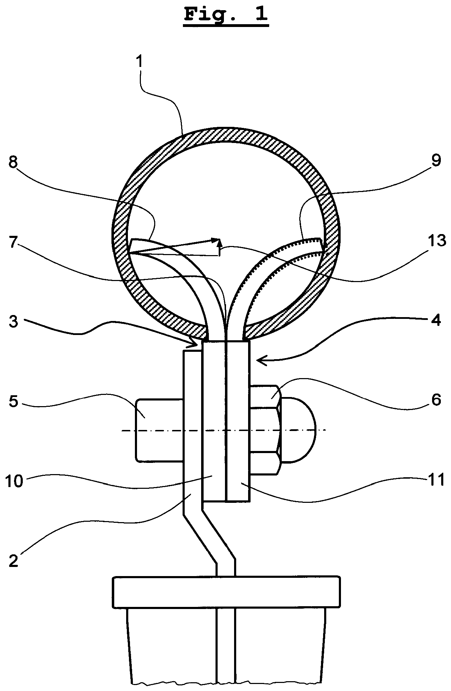

Fig. 1 zeigt eine erfindungsgemäße Vorrichtung, welche ein als Rundrohr ausgebildetes Hohlprofil 1, einen an diesem zu verankernden Gegenstand 2, zwei Verbindungsteile 3, 4 und eine aus Schraube 5 und Gewindemutter 6 gebildete Verschraubung umfasst.

An jener Stelle der Mantelfläche des Hohlprofils 1, an welcher der Gegenstand 2 verankert ist, ist die Mantelfläche des Hohlprofils 1 durch eine - vorzugsweise kreisrunde - Bohrung 7 durchbrochen. Durch diese Bohrung 7 hindurch ragt sowohl ein Fortsatz 8 des Verbindungsteils 3 als auch ein Fortsatz 9 des Verbindungsteils 4 in den Hohlraum des Hohlprofils 1 hinein.

Die Verbindungsteile 3, 4 sind in diesem vorteilhaften Fall zueinander genau gleich ausgebildet. In eingebautem Zustand sind sie relativ zueinander um 180° um die Achse der Bohrung 7 verdreht angeordnet. Die Fortsätze 8, 9 der Verbindungsteile 3, 4 sind etwa halbkreisförmig gebogene längliche Teile. Neben den durch die Bohrung 7 ragenden Fortsätzen 8, 9 weisen die Verbindungsteile 3, 4 etwa plättchenförmige "äußere Teile" 10, 11 auf, welche bei montierter Vorrichtung mit ihren den Fortsätzen 8, 9 zugewandten Stirnseiten im Nahbereich der Bohrung 7 außen an der Mantelfläche des Hohlprofils 1 anliegen.

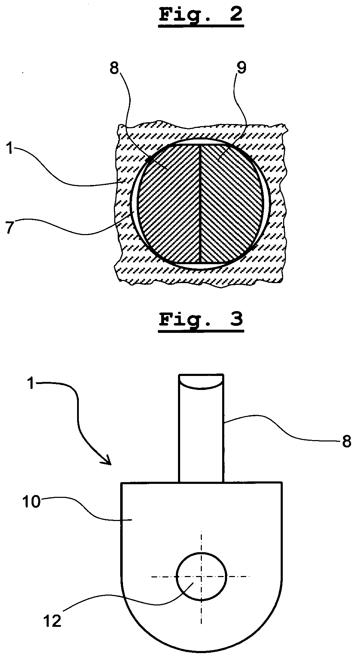

Fig. 2 zeigt in Schnittansicht die Verhältnisse an der Bohrung 7 im Hohlprofil 1, wobei die Schnittebene parallel zur Querschnittsfläche der Bohrung 7 liegt. In Fig. 2 ist gut erkennbar, dass die Querschnittsfläche der Fortsätze 8, 9 jeweils etwa die Form einer Halbkreisfläche hat und dass die beiden Fortsätze 8, 9 mit ihrer flachen Mantelflächenseiten aneinander anliegen und gemeinsam die Querschnittsfläche der Bohrung 7 weitgehend ausfüllen. Durch diese Dimensionierung können die Fortsätze 8, 9 bei nicht miteinander verbundenen Verbindungsteilen 3, 4 gut durch die Bohrung 7 eingefädelt werden und haben höchstmögliches Flächenträgheitsmoment und damit jene Querschnittsfläche, mit der für diesen Fall die höchstmögliche Biegesteifigkeit und die höchstmögliche Biegefestigkeit der Fortsätze 8, 9 erreichbar sind.

Fig. 3 zeigt den Verbindungsteil 3 - zu welchem der Verbindungsteil 4 genau gleich sein kann - in Frontalansicht. Der plättchenförmige äußere Teil 10 ist durch eine normal zu seiner Hauptebene ausgerichtete Schraubendurchgangsbohrung 12 durchbrochen.

Für die Montage der Verankerung werden die Fortsätze 8, 9 beider Verbindungsteile 3, 4 durch die Bohrung 7 hindurch in den Hohlraum des Hohlprofils 1 eingefädelt. Für das Einfädeln müssen die beiden Verbindungsteile 3, 4 relativ zueinander bewegt werden. Das ist beim händischen Einfädeln problemlos möglich und wird auch ganz spontan gemacht - weil die beiden Verbindungsteile 3, 4 ja zueinander separat und nicht von vornherein miteinander verbunden sind. Nach dem Einfädeln der Fortsätze 8, 9 werden die beiden Verbindungsteile 3, 4 aneinander starr fixiert, womit auch die Fortsätze 8, 9 nicht mehr gegeneinander bewegbar sind. Weil das durch die Fortsätze 8, 9 beider Verbindungsteile 3, 4 gemeinsam gebildete feste Gebilde breiter ist als der Durchmesser der Bohrung 7, sind die Fortsätze 8, 9 nicht mehr durch die Bohrung 7 heraus bewegbar, womit Bewegung der Verbindungsteile 3, 4 vom Hohlprofil 1 weg, blockiert ist.

Im Beispiel gemäß Fig. 1 bis 3 werden nach dem Einfädeln der Fortsätze 8, 9 durch die Bohrung 7 die Verbindungsteile 3, 4 und der zu verankernde Gegenstand 2 so zueinander zurechtgerückt, dass die Achsen der Schraubendurchgangsbohrungen 12 der beiden Verbindungsteile 3, 4 und die Achse einer an dem zu verankernden Gegenstand 2 befindliche weitere Schraubendurchgangsbohrung zumindest etwa zueinander fluchten. Dann wird die Schraube 5 durch die Schraubendurchgangsbohrungen 12 hindurch gesteckt und vom freien Ende des Gewindebolzens der Schraube 5 her wird die Gewindemutter 6 soweit aufgeschraubt, dass der zu verankernde Teil 2 und die beiden Verbindungsteile 3, 4 fest aneinander gedrückt werden. Bevor die aus Schraube 5 und Gewindemutter 6 gebildete Verschraubung fest angezogen wird, kann die Winkelstellung des zu verankernden Gegenstandes 2 gegenüber dem Hohlprofil noch um die Achse der Schraube 5 in gewünschter Weise eingestellt werden.

Idealerweise sind die Fortsätze 8, 9 bei fertig montierter Vorrichtung etwas elastisch vorgespannt, sodass sie nicht einfach nur an der an Begrenzungswänden des Hohlraumes des Hohlprofils 1 und/oder an der Mantelfläche der Bohrung 7 anliegen, sondern, dass sie angedrückt sind. In Fig. 1 ist das an Hand einer in punktierten Linien eingezeichneten Kontur des Fortsatzes 9 angedeutet. Die punktierte Kontur würde der Fortsatz 9 dann haben, wenn er bei gleicher Lage des äußeren Teils 11 nicht elastisch verformt wäre.

Indem die Fortsätze 8, 9 im Hohlprofil 1 von der Bohrung 7 um etwa eine halbe Querschnittsabmessung des Hohlprofils 1 in Achsrichtung der Bohrachse von der Bohrung 7 entfernt am Hohlprofil 1 anliegen, ist die Verbindung relativ starr gegen Verformung zufolge Kräftepaaren, bei welchen die Kräfte auf die Achse der Bohrung 7 und auf die Profilrichtung des Hohlprofils 1 normal ausgerichtet sind.

Die Fortsätze 8, 9 sollten - wie dargestellt - am Hohlprofil 1 an einer von der Bohrung 7 beabstandeten Stelle einer Fläche anliegen, die gegenüber der Achse der Bohrung 7 derart geneigt ist, dass ihre Flächennormale eine zur Achsrichtung der Bohrung 7 parallele Richtungskomponente 13 aufweist, die von der Bohrung 7 weg ausgerichtet ist. Damit wird erreicht, dass durch die elastische Vorspannung der Fortsätze 8, 9 eine resultierende Kraft auf die äußeren Teile 10, 11 der Verbindungsteile 3, 4 wirkt, durch welche diese auf das Hohlprofil 1 hingezogen werden. Dadurch hält die Verankerung spielfrei.

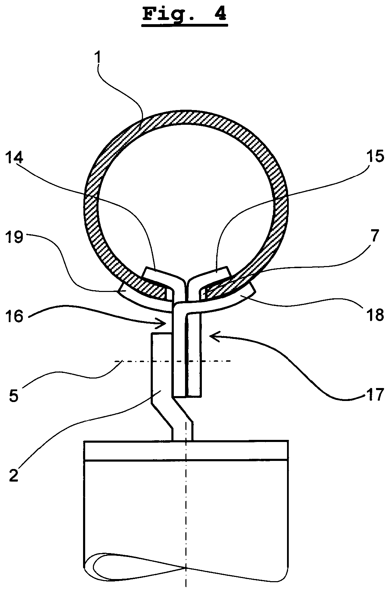

Fig. 4 bis Fig. 6 zeigen eine zweite Ausführung einer erfindungsgemäßen Vorrichtung. Gegenüber der Vorrichtung von Fig. 1 bis Fig. 3 sind die wesentlichen Unterschiede, dass die in das Hohlprofil 1 ragenden Fortsätze 14, 15 der Verbindungsteile 16, 17 im inneren des Hohlprofils 1 an Flächen anliegen, die zur Achse der Bohrung 7 fast in einem rechten Winkel ausgerichtet sind und, dass zusätzlich an der Außenmantelfläche des Hohlprofils Laschen 18, 19 der Verbindungsteile 16, 17 an Flächen anliegen, die ebenfalls zur Achse der Bohrung 7 fast in einem rechten Winkel ausgerichtet sind. Die Verbindung ist besonders steif und fest gegen Beanspruchungen zufolge von Kräften, die zur Achse der Bohrung 7 parallel ausgerichtet sind.

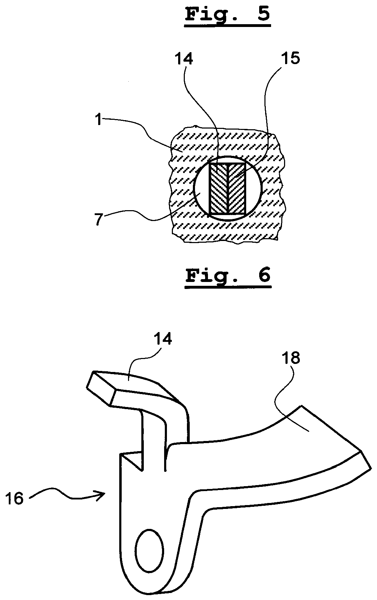

Fig. 5 zeigt analog zu Fig. 2 den Bereich an der Bohrung 7.

Fig. 6 zeigt den Verbindungsteil 16 allein in perspektivischer Ansicht.

Auch im Fall der Vorrichtung von Fig. 4 bis Fig. 6 sind die Verbindungsteile 16, 17 zueinander genau gleich ausgebildet und in eingebautem Zustand relativ zueinander um 180° um die Achse der Bohrung 7 verdreht angeordnet.

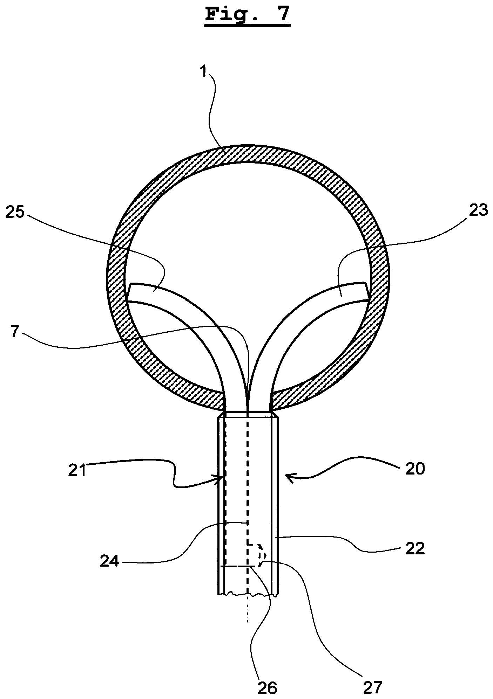

Fig. 7 veranschaulicht eine Vorrichtung, die nicht erfindungsgemäß ist, bei welcher die beiden Verbindungsteile 20, 21 nicht zueinander gleich sind. In Fig. 7 sind verdeckte Linien, wenn sie für das Verständnis der Zeichnung wichtig sind, strichliert dargestellt.

Der erste Verbindungsteil 20 umfasst einen Gewindebolzen 22, von dessen dem Hohlprofil 1 zugewandter Stirnseite ein Fortsatz 23 vorspringt. In montiertem Zustand ragt dieser Fortsatz 23 durch die Bohrung 7 in der Mantelfläche des Hohlprofils 1 hindurch in dessen Hohlraum hinein und hat auch sonst die Funktionen wie die Fortsätze 8, 9, 14, 15 gemäß den weiter oben beschriebenen Bauweisen.

Entlang des Gewindebolzens 22 des ersten Verbindungsteils 20 verläuft eine Nut 24, welche in Fig. 7 vor allem an Hand ihrer als strichlierte Linie dargestellten Grundfläche erkennbar ist.

In die Nut 24 am ersten Verbindungsteil 20 ist in montiertem Zustand der zweite Verbindungsteil 21 eingelegt. Der zweite Verbindungsteil 21 hat die Form eines schlanken Stabes, dessen Querschnittsfläche in der Nut 24 Platz findet. Die in montiertem Zustand dem Hohlprofil 1 zugewandte Seite des zweiten Verbindungsteils 21 ist zu einem Fortsatz 25 gekrümmt. Dieser Fortsatz 25 ragt durch die Bohrung 7 im Hohlprofil 1 hindurch in den Hohlraum des Hohlprofils 1 hinein und hat auch sonst die Funktionen wie die Fortsätze 8, 9, 14, 15 gemäß den weiter oben beschriebenen Bauweisen.

Damit der zweite Verbindungsteil 21 gegenüber dem ersten Verbindungsteil 20 gegen Verrutschen in Längsrichtung des Gewindebolzens 22 gesichert ist, ragt ein kurzer Vorsprung 26 vom zweiten Verbindungsteil 21 aus normal zur Richtung des Gewindebolzens 22 in eine Bohrung 27 im Gewindebolzen 22, deren Richtung normal zur Achsrichtung des Gewindebolzens 22 ausgerichtete ist.

Nach dem Einfädeln der Fortsätze 23, 25 durch die Bohrung 7 in das Hohlprofil 1 und dem Einstecken des Vorsprungs 26 des zweiten Verbindungsteils 21 in die Bohrung 27 am ersten Verbindungsteil 20 wird die Stellung fixiert, indem eine Gewindemutter (nicht dargestellt) am Gewindebolzen 22 bis an das Hohlprofil 1 herangeschraubt wird und zumindest bis zur Spielfreiheit angezogen wird. Die Gewindemutter umfasst damit auch den zweiten Verbindungsteil 21 und fixiert ihn am ersten Verbindungsteil 20.

Am Gewindebolzen 22, welcher Teil des ersten Verbindungsteils 20 ist, können dann - typischerweise unter Verwendung einer weiteren auf den Gewindebolzen aufgeschraubten Gewindemutter - die letztendlich am Hohlprofil zu verankernden Gegenstände befestigt werden.

Die Bauweise gemäß Fig. 7 kann als eleganter empfunden werden als die beiden zuvor beschriebenen Bauweisen. Bei der Anwendung zum Bilden einer T-Verbindung zwischen dem durchgehenden Hohlprofil 1 und einem an diesem endenden Längsteil bietet sie allerdings nicht derart einfache Schwenkbarkeit des endenden Teils gegenüber dem durchgehenden Holprofil 1, wie dies die oben beschriebenen beiden Bauweisen bieten.

Wie schon eingangs erwähnt ist die erfindungsgemäße Verankerung vor allem für das Bilden von Geländern von Treppen und Wegen im Freigelände vorteilhaft, wobei typischerweise ein Handlauf als durchgehendes Hohlprofil ausgebildet ist und ein Steher - also eine Säule, welche den Handlauf gegenüber dem Untergrund hält - der erfindungsgemäß am Handlauf verankerte Gegenstand ist. Für das Herstellen der Verbindung zwischen einem durchgehenden Handlauf und einem davon T-förmig nach unten abstehenden Steher ist neben einfachen Verschraubungsarbeiten nur der Arbeitsschritt des Bohrens eines kreisrunden Loches (Bohrung 7) durch den unten liegenden Bereich der Mantelfläche des den Handlauf bildenden Hohlprofils erforderlich. Dieser Arbeitsschritt kann genau wie die Verschraubungsarbeiten problemlos im Freigelände durchgeführt werden. An elektrischen Maschinen sind damit nur ein Bohrschrauber und ein Trennschneider (bzw. ein anderes elektrisches Schneidegerät für das Ablängen von Hohlprofilen) mitzuführen. Beide Maschinen sind als relativ handliche akkubetriebene Handmaschinen problemlos mitführbar, sodass es nicht erforderlich ist, nach dem Ausmessen am Montageort den Montageort zu verlassen um Arbeitsschritte in einer Werkstatt durchzuführen.

Ohne Anspruch auf Vollständigkeit seien an Verallgemeinerungen des Erfindungsgedankens noch kurz genannt:
Es können natürlich auch mehr als zwei Verbindungsteile mit Fortsätzen verwendet werden; erfindungsgemäß sind mindestens zwei Verbindungsteile erforderlich.

Die starre Verbindung zwischen den Verbindungsteilen außerhalb des Hohlprofils ist bevorzugt eine lösbare Verbindung, beispielsweise unter Anwendung einer Gewindeverbindung oder einer Steckverbindung verbunden mit einer elastischen Verrastung. Es könnte aber auch eine unlösbare Verbindung sein, beispielsweise eine Vernietung, Verklebung, Verlötung oder Verschweißung. Unlösbare Verbindungen kommen vor allem dann in Betracht, wenn erhöhte Sicherheit gegen Diebstahl oder Vandalismus gegeben sein soll.

Die Fortsätze, welche jeweils Teil eines Verbindungsteiles sind und in den Hohlraum des Hohlprofils ragen, brauchen zueinander nicht gleich sein. Es könnte beispielsweise auch ein erster stark gekrümmter Fortsatz, welcher in montiertem Zustand im Hohlprofil an mehreren Stellen anliegt, auch mit einem zweiten geraden Fortsatz kombiniert werden, welcher nach der Montage nur die Beweglichkeit des ersten Fortsatzes blockiert.

Das Hohlprofil braucht nicht unbedingt ein geschlossenes zu sein, also einen durch die Querschnittsfläche des Hohlprofils vollständig umringten Hohlraum aufweisen. Es könnte beispielsweise auch ein U- oder C-Profil sein. Die Erfindung ist allerdings an geschlossenen Hohlprofilen besonders wertvoll, da bei diesen der Vorteil, dass an der Innenseite der Mantelflächen nicht hantiert werden muss, besonders zum Tragen kommt.

Bei der Anwendung der Erfindung für den Bau von Geländern, die Handlauf und Steher umfassen, kann die erfindungsgemäße Verankerung auch so verwendet werden, dass ein Steher das durchgehende Hohlprofil bildet. Typischerweise können so Quer- oder Diagonalstreben die zwischen benachbarten Stehern verlaufen mit den Stehern verbunden werden.

## Patentansprüche

1. Vorrichtung, die ein Hohlprofil (1) und einen an der Mantelfläche des Hohlprofils (1) verankerten Gegenstand (2) umfasst, wobei die Mantelfläche des Hohlprofils (1) durch eine Bohrung (7) durchbrochen ist und sich Verbindungsteile (3, 4, 16, 17), die sowohl mit dem Hohlprofil (1) als auch mit dem zu verankernden Gegenstand (2) verbunden sind, von außerhalb des Hohlprofils (1) durch die Bohrung (7) hindurch in den Hohlraum im Hohlprofil (1) hinein erstrecken, wobei jeweils zwei Verbindungsteile (3, 4; 16, 17) zueinander separat sind, wobei jeder Verbindungsteil (3, 4, 16, 17) jeweils einen Fortsatz (8, 9, 14, 15) aufweist, welcher durch die Bohrung (7) in den Hohlraum des Hohlprofils (1) hineinragt, wobei die beiden Verbindungsteile (3, 4; 16, 17) in montiertem Zustand außerhalb des Hohlprofils (1) starr miteinander verbunden sind und das dabei durch die Fortsätze (8, 9; 14, 15) beider Verbindungsteile (3, 4; 16, 17) gemeinsam gebildete starre Gebilde in einer zur Achse der der Bohrung (7) normal liegenden Ebene breiter ist als der Durchmesser der Bohrung (7), **dadurch gekennzeichnet, dass**
die Verbindung zwischen den jeweils zwei zueinander separaten Verbindungsteilen (3, 4; 16, 17) und dem zu verankernden Gegenstand (2) eine Verschraubung ist, welche eine Schraube (5) und eine Gewindemutter (6) umfasst, wobei die Schraube (5) durch zueinander fluchtend ausgerichtete Schraubendurchgangsbohrungen (12) in den Verbindungsteilen (3, 4) und in dem zu verankernden Gegenstand (2) hindurch verläuft.

2. Vorrichtung nach Anspruch 1, **dadurch gekennzeichnet, dass** die Querschnittsfläche der Bohrung (7) eine Kreisfläche ist.

3. Vorrichtung nach Anspruch 1 oder 2, **dadurch gekennzeichnet, dass** die Fortsätze (8, 9, 14, 15) vom Hohlraum des Hohlprofils (1) her am Hohlprofil (1) an einem von der Bohrung (7) beabstandeten Flächenstück anliegen, welches gegenüber der Achse der Bohrung (7) derart geneigt ist, dass seine Flächennormale eine zur Achsrichtung der Bohrung (7) parallele Richtungskomponente (13) aufweist, die von der Bohrung (7) weg ausgerichtet ist.

4. Vorrichtung nach einem der Ansprüche 1 bis 3, **dadurch gekennzeichnet, dass** die beiden Verbindungsteile (3, 4; 16, 17) zueinander gleich ausgebildet sind und, dass sie zueinander um die Achse der Bohrung (7) verdreht angeordnet sind.

5. Vorrichtung nach Anspruch 4, **dadurch gekennzeichnet, dass** genau zwei Verbindungsteile (3, 4; 16, 17) verwendet werden und, dass der Verdrehungswinkel 180° beträgt.

6. Vorrichtung nach einem der Ansprüche 1 bis 5, **dadurch gekennzeichnet, dass** die Achse der Schraubendurchgangsbohrung (12) normal zur Achse der Bohrung (7) in der Mantelfläche des Hohlprofils (1) ausgerichtet ist.

7. Vorrichtung nach einem der Ansprüche 1 bis 6, **dadurch gekennzeichnet, dass** das Hohlprofil (1) Teil eines einen Handlauf und mindestens einen oder mehrere Steher umfassenden Geländers im Freigelände ist, wobei durch das Hohlprofil (1) entweder der Handlauf oder ein Steher gebildet ist.

## Claims

1. Device comprising a hollow profile (1) and an object (2) anchored to the outer surface of the hollow profile (1), whereby the outer surface of the hollow profile (1) is perforated by a hole (7) and connecting parts (3, 4, 16, 17), which are connected both to the hollow profile (1) and to the object (2) to be anchored, extend from outside the hollow profile (1) through the hole (7) into the cavity in the hollow profile (1), whereby, respectively, two connecting parts (3, 4; 16, 17) are separate in relation to one another, whereby each connecting part (3, 4, 16, 17) has a respective extension (8, 9, 14, 15), which projects through the hole (7) into the cavity of the hollow profile (1), whereby the two connecting parts (3, 4, 16, 17) in assembled condition are rigidly connected to one another outside the profile (1) and whereby the rigid construction formed jointly by the extensions (8, 9; 14, 15) of the two connecting parts (3, 4; 16, 17) is wider in a plane lying perpendicular to the axis of the hole (7) than the diameter of the hole (7),
**characterised in that**
the connection between the two respectively separate connecting parts (3, 4; 16, 17) and the object (2) to be anchored is a screw connection which comprises a screw (5) and a threaded nut (6), whereby the screw (5) extends through screw through-holes (12), which are aligned with one another, in the connecting parts (3, 4) and in the object (2) to be anchored.

2. A device according to claim 1; **characterised in that** the cross-sectional area of the hole (7) is a circular area.

3. Device according to claim 1 or 2, **characterised in that** the extensions (8, 9, 14, 15), from the cavity of the hollow profile (1), bear against the hollow profile (1) on a surface piece, which is spaced from the hole (7) and is inclined with respect to the axis of the hole (7) in such a way that its surface normal has a directional component (13), which is parallel to the axial direction of the hole (7) and is oriented away from the hole (7).

4. Device according to any one of claims 1 to 3, **characterised in that** the two connecting parts (3, 4; 16, 17) are identical to one another and **in that** they are arranged in a rotated manner relative to one another around the axis of the hole (7).

5. Device according to claim 4, **characterised in that** exactly two connecting parts (3, 4; 16, 17) are used and that the angle of rotation is 180°.

6. Device according to any one of claims 1 to 5, **characterised in that** the axis of the screw through-hole (12) is oriented perpendicular to the axis of the hole (7) in the outer surface of the hollow profile (1).

7. Device according to any one of claims 1 to 6, **characterised in that** the hollow profile (1) is part of an outdoor railing comprising a handrail and at least one or more stanchions, wherein either the handrail or a stanchion is formed by the hollow profile (1).

## Revendications

1. Dispositif comprenant un profilé creux (1) et un objet (2) ancré à la surface du profilé creux (1), la surface du profilé creux (1) étant percée par un alésage (7) et des éléments de liaison (3, 4, 16, 17) raccordés à la fois au profilé creux (1) et à l'objet à ancrer (2) s'étendant depuis l'extérieur du profilé creux (1) à travers l'alésage (7) dans l'espace creux dans le profilé creux (1), deux éléments de liaison (3, 4; 16, 17) étant séparés l'un de l'autre, chaque élément de liaison (3, 4, 16, 17) présentant une saillie (8, 9, 14, 15) qui pénètre à travers l'alésage (7) dans l'espace creux du profilé creux (1), les deux éléments de liaison (3, 4; 16, 17), à l'état monté, étant raccordés fixement ensemble à l'extérieur du profilé creux (1), et la structure fixe formée par les saillies (8, 9; 14, 15) des deux éléments de liaison (3, 4; 16, 17) étant plus large dans un plan normal par rapport à l'axe de l'alésage (7) que le diamètre de l'alésage (7),
**caractérisé en ce que**
la liaison entre les deux éléments de liaison séparés (3, 4; 16, 17) et l'objet à ancrer (2) est un assemblage à vis qui comprend une vis (5) et un écrou fileté (6), la vis (5) s'étendant à travers des alésages de passage de vis (12) alignés dans les éléments de liaison (3, 4) et dans l'objet à ancrer (2).

2. Dispositif selon la revendication 1, **caractérisé en ce que** la section transversale de l'alésage (7) est une surface circulaire.

3. Dispositif selon la revendication 1 ou 2, **caractérisé en ce que** les saillies (8, 9, 14, 15) reposent depuis l'espace creux du profilé creux (1) sur le profilé creux (1) sur une surface à distance de l'alésage (7) qui est inclinée par rapport à l'axe de l'alésage (7) de telle sorte que sa normale à la surface présente une composante directionnelle (13) parallèle à la direction axiale de l'alésage (7) qui est orientée à l'opposé de l'alésage (7).

4. Dispositif selon l'une des revendications 1 à 3, **caractérisé en ce que** les deux éléments de liaison (3, 4; 16, 17) sont de conception identique l'un à l'autre et **en ce qu'**ils sont agencés pivotés l'un par rapport à l'autre autour de l'axe de l'alésage (7).

5. Dispositif selon la revendication 4, **caractérisé en ce qu'**il est utilisé précisément deux éléments de liaison (3, 4; 16, 17) et **en ce que** l'angle de rotation est de 180°.

6. Dispositif selon l'une des revendications 1 à 5, **caractérisé en ce que** l'axe de l'alésage de passage de vis (12) est orienté normalement par rapport à l'axe de l'alésage (7) dans la surface du profilé creux (1).

7. Dispositif selon l'une des revendications 1 à 6, **caractérisé en ce que** le profilé creux (1) fait partie d'une balustrade comprenant une main courante et au moins un ou plusieurs montants, dans lequel soit la main courante soit un montant est formé par le profilé creux (1).
